# EUROPEAN PATENT APPLICATION

(11) **EP 4 535 257 A1**
(43) Date of publication of application: **09.04.2025**
(21) Application number: 24205095.3
(22) Date of filing: 07.10.2024
(51) Int. Cl.: G06Q 10/087, G07G 1/00

(54) **ELECTRONIC ITEM MANAGEMENT FOR ITEM STORAGE AREA**

(30) Priority: 06.10.2023 US 202318377453
(71) Applicant: PRATT & WHITNEY CANADA CORP., Longueuil, Québec J4G 1A1 (CA)
(72) Inventor: ZEGAR, Krzysztof, (01BE5) Longueuil, J4G 1A1 (CA); KUZDRO, Magdalena A., (01BE5) Longueuil, J4G 1A1 (CA)
(74) Representative: Dehns

(57) **Abstract**

An item management system includes a radio-frequency identification (RFID) reading system (34) and a control system (40). The RFID reading system (34) receives user information from a user RFID tag (32). The RFID reading system (34) receives item information from an item RFID tag (30). The control system (40) performs a checkout process for an item inventoried within the item storage area (22) to a user, where the user RFID tag (32) is assigned to the user. The checkout process includes: identifying the user based on the user information received by the RFID reading system (34); identifying the item to be checked out based on the item information received by the RFID reading system (34); and registering the item as being checked out to the user using the user information and the item information. The control system (40) identifies the item as the item is removed from the item storage area (22) based on the item information received by the RFID reading system (34).

## Description

### TECHNICAL FIELD

This disclosure relates generally to item management and, more particularly, to checkout processes and/or check-in processes for items within an operating environment.

### BACKGROUND INFORMATION

In an operating environment such as a manufacturing facility, tools may be checked out from and checked back into a tool storage area. Such checkout / check-in processes may be manual, time intensive and prone to user error. There is a need in the art therefore for improved processes for checking out, checking-in and/or otherwise monitoring tools and/or other items within an operating environment.

### SUMMARY

According to an aspect of the present invention, a system is provided for item management. This system includes a radio-frequency identification reading system for an item storage area, and a control system. The radio-frequency identification reading system is configured to receive user information from a user radio-frequency identification tag. The radio-frequency identification reading system is configured to receive item information from an item radio-frequency identification tag. The control system is in signal communication with the radio-frequency identification reading system. The control system is configured to perform a checkout process for an item inventoried within the item storage area to a user. The user radio-frequency identification tag is assigned to the user. The item radio-frequency identification tag is disposed with the item. The checkout process includes: identifying the user based on the user information received by the radio-frequency identification reading system; identifying the item to be checked out based on the item information received by the radio-frequency identification reading system; and registering the item as being checked out to the user using the user information and the item information. The control system is configured to identify the item as the item is removed from the item storage area based on the item information received by the radio-frequency identification reading system. The control system is configured to trigger a response when the item removed from the item storage area has not been registered as being checked out.

In an embodiment of the above, the system may include an alert system for the item storage area. The response may include an alert issued by the alert system.

In an embodiment according to any of the previous embodiments, the alert may be or otherwise include an audible alert.

In an embodiment according to any of the previous embodiments, the alert may be or otherwise include a visual alert.

In an embodiment according to any of the previous embodiments, the radio-frequency identification reading system may include a first radio-frequency identification reader arranged within the item storage area. The first radio-frequency identification reader may be configured to obtain the user information and the item information for the checkout process.

In an embodiment according to any of the previous embodiments, the radio-frequency identification reading system may include a second radio-frequency identification reader arranged at a portal for the item storage area. The second radio-frequency identification reader may be configured to obtain the item information as the item is removed from the item storage area through the portal.

In an embodiment according to any of the previous embodiments, the portal may be configured as or otherwise include an entry into and/or an exit from the item storage area.

In an embodiment according to any of the previous embodiments, the user radio-frequency identification tag may be included as part of a user identification device.

In an embodiment according to any of the previous embodiments, the item radio-frequency identification tag may be affixed to the item.

In an embodiment according to any of the previous embodiments, the item may be or otherwise include a tool.

In an embodiment according to any of the previous embodiments, the item may be or otherwise include a cart storing a plurality of tools.

In an embodiment according to any of the previous embodiments, the system may also include a display screen within the item storage area and in signal communication with the control system. The control system may be configured to signal the display screen to display a notification to the user during the checkout process when information is known that another user previously checked out one or more of the plurality of tools from the cart.

In an embodiment according to any of the previous embodiments, the item may be configured as or otherwise include a manufacturing material.

In an embodiment according to any of the previous embodiments, the system may also include a display screen arranged within the item storage area and in signal communication with the control system. The control system may be configured to signal the display screen to display inventory information related to the item registered as being checked out to the user.

In an embodiment according to any of the previous embodiments, the inventory information may include: an identification of the item; and an identification of the user.

In an embodiment according to any of the previous embodiments, the inventory information may include a date and/or a time at which the item was registered as being checked out to the user.

In an embodiment according to any of the previous embodiments, the system may also include a display screen arranged within the item storage area and in signal communication with the control system. The control system may be configured to signal the display screen to display a notification to the user during the checkout process when a parameter for the item is within a predetermined time of expiration.

In an embodiment according to any of the previous embodiments, the control system may be configured to perform a check-in process for the item when the item is returned to the item storage area. The check-in process may include: identifying the item to be checked-in based on the item information received by the radio-frequency identification reading system; and registering the item as being checked-in by the user using the item information.

In an embodiment according to any of the previous embodiments, the system may also include a tracking system configured to track a location of the item when the item is outside of the item storage area.

According to another aspect of the present invention, another system is provided for item management. This system includes a first radio-frequency identification reader, a second radio-frequency identification reader and a control system. The first radio-frequency identification reader is configured to obtain user information from a user radio-frequency identification tag when the user radio-frequency identification tag is within a first distance to the first radio-frequency identification reader. The radio-frequency identification reading system (e.g. the first radio-frequency identification reader, or the system defined above) is configured to obtain item information from an item radio-frequency identification tag when the item radio-frequency identification tag is within the first distance to the first radio-frequency identification reader. The second radio-frequency identification reader is configured to obtain the item information from the item radio-frequency identification tag when the item radio-frequency identification tag is within a second distance to the first radio-frequency identification reader that is greater than the first distance. The control system is in signal communication with the first radio-frequency identification reader and the second radio-frequency identification reader. The control system is configured to perform a checkout process for an item inventoried within an item storage area to a user using the user information and the item information obtained by the first radio-frequency identification reader. The user radio-frequency identification tag is assigned to the user. The item radio-frequency identification tag is disposed with the item. The control system is configured to identify the item as the item is removed from the item storage area based on the item information automatically obtain by the second radio-frequency identification reader. The control system is configured to trigger a response when the item removed from the item storage area is still registered as being inventoried within the item storage area.

According to still another aspect of the present invention, a method is provided for item management. During this method, a plurality of items are stored within an item storage area, where the items include a first item. The first item is checked out from an inventory of the items stored within the item storage area to a user. The checking out of the first item includes: electronically identifying the user; electronically identifying the first item; and registering the first item as being checked out to the user. Removal of each item of the items removed from the storage area is electronically monitored, and a response is triggered when any one of the items is removed from the item storage area without first being checked out.

In an embodiment of the above, the electronically identifying of the user, the electronically identifying of the first item and the electronically monitoring of the removal of each item of the items removed from the storage area may be performed using a radio-frequency identification reading system.

In an embodiment according to any of the previous embodiments, the response may include an audible and/or visual alert to observers at the item storage area.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a schematic illustration of an item storage area within an operating environment.
FIG. 2 is a schematic illustration of a system for item management within and about the item storage area.
FIG. 3 is a perspective illustration of walls surrounding the item storage area arranged with components of the item management system.
FIG. 4 is a flow diagram of a method for item management.
FIG. 5 is a schematic illustration of the item storage area with multiple monitored portals.

### DETAILED DESCRIPTION

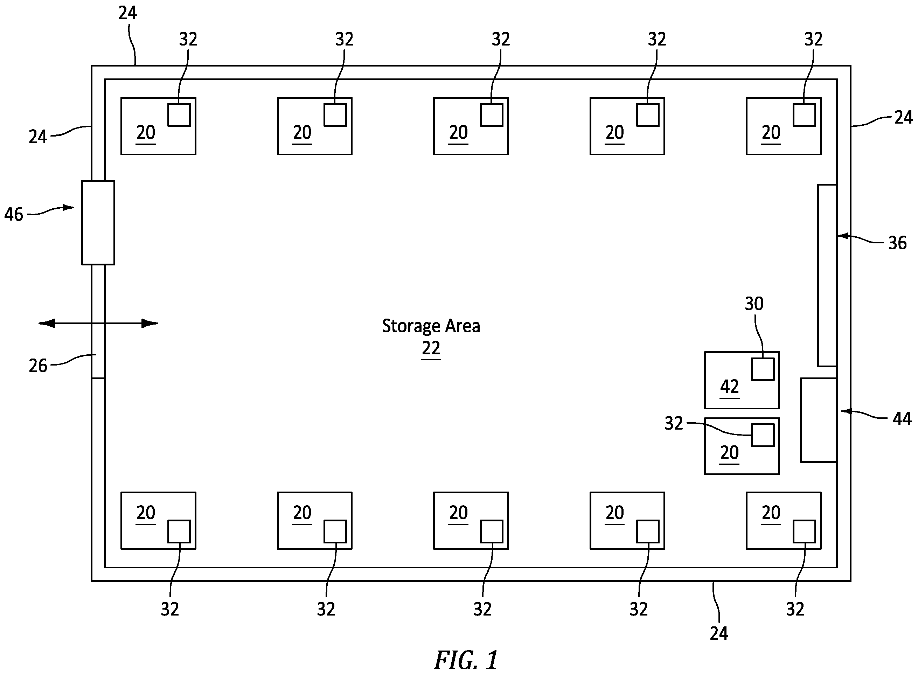

The present disclosure includes systems and methods for item management within an operating environment such as a manufacturing facility. More particularly, referring to FIG. 1, the systems and methods of the present disclosure manage removal of one or more items 20 from and/or return of one or more of the items 20 to an item storage area 22. This item storage area 22 may be an enclosed area within the operating environment, such as an item storage room within the manufacturing facility. The item storage area 22 may be surrounded by walls 24 on each side of the item storage area 22, where at least (or only) one of the walls 24 includes a portal 26. The portal 26 may be a doorway, a passthrough or any other entry into and/or exit from the item storage area 22. Alternatively, the item storage area 22 may be a designated (e.g., cordoned off) area on a floor of the manufacturing facility.

The items 20 stored within the item storage area 22 may be tools. One or more of these tools may be calibrated tools and/or one or more of the tools may be uncalibrated tools. Examples of the calibrated tools include, but are not limited to, a torque wrench, a set of calipers, a micrometer, a multimeter, a pressure gage, a strain gage, a temperature gage, a scanning tool, and the like. Examples of the uncalibrated tools include, but are not limited to, a regular wrench, a screwdriver, a drill, a pneumatic tool, a grinding tool, a bit, and the like. The items 20 stored within the item storage area 22 may also or alternatively be tool carts (e.g., tool trolleys, mobile tool chests, etc.) in which one or more of the tools may be stored. The items 20 stored within the item storage area 22 may also or alternatively include various manufacturing materials which may or may not be stored within a respective container. Examples of the manufacturing materials include, but are not limited to, chemicals and raw materials such as metal, polymer and/or ceramic stock material. The items 20 stored within the item storage area 22 may still also or alternatively include various parts for products being manufactured within the manufacturing facility. The systems and methods of the present disclosure, however, are not limited to managing such exemplary items.

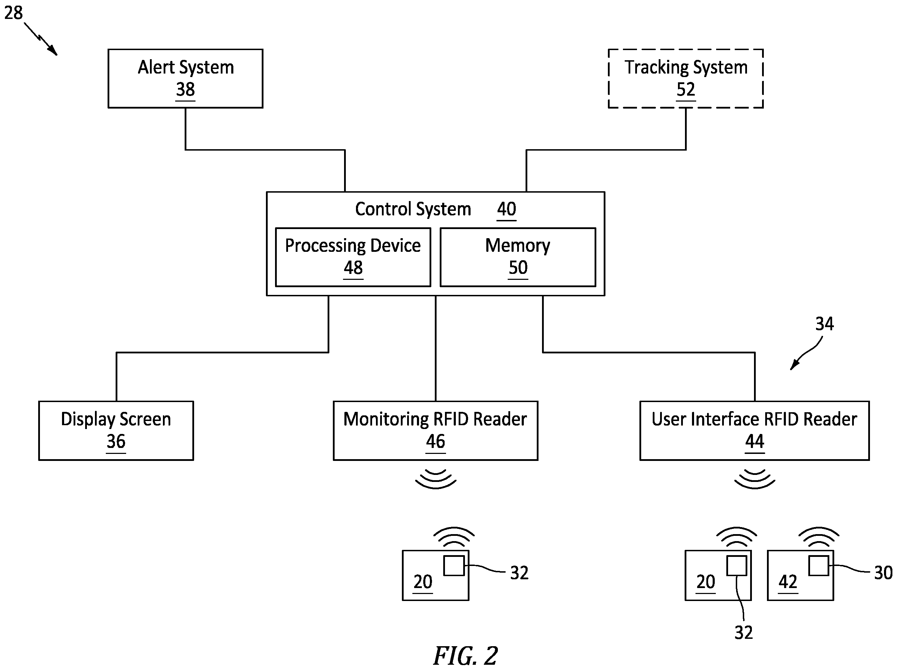

FIG. 2 illustrates a system 28 for management of the removal of the item(s) 20 from and/or the return of the item(s) 20 to the item storage area 22. This item management system 28 includes one or more user radio-frequency identification (RFID) tags 30 (one shown in FIGS. 1 and 2 for clarity of illustration) and one or more item radio-frequency identification (RFID) tags 32. The item management system 28 also includes a radio-frequency identification (RFID) reading system 34, a display screen 36, an alert system 38 and a control system 40.

Each user RFID tag 30 may be uniquely assigned to a particular user who works within the operating environment, such as a particular assembly line technician at the manufacturing facility who is granted access to the item storage area 22. Each user RFID tag 30 is configured to transmit an output signal when triggered by an electromagnetic interrogation signal (e.g., an electromagnetic pulse), which output signal conveys and/or is otherwise indicative of user information. This user information may be uniquely associated with the user to which the user RFID tag 30 is assigned. The user information, for example, may include an identity (e.g., name, employee identification number, etc.) of the user and/or an access parameter for the user. The access parameter may identify which of the item(s) 20 and/or which type(s) of the items 20 that user is currently granted access to, etc. Each user RFID tag 30 may be arranged with an identification device 42 for the user. Each user RFID tag 30, for example, may be imbedded within and/or otherwise affixed to the user identification device 42. Examples of the user identification device 42 include, but are not limited to, a user identification (ID) card, a user identification (ID) badge and/or any other device which the user may readily carry on his/her own person; e.g., in a pocket, around a neck, around a wrist, etc.

Each item RFID tag 32 may be uniquely assigned to a particular item 20 stored and inventoried within the item storage area 22. Each item RFID tag 32 is configured to transmit an output signal when triggered by an electromagnetic interrogation signal (e.g., an electromagnetic pulse), which output signal conveys and/or is otherwise indicative of item information. This item information may be uniquely associated with the item 20 to which the item RFID tag 32 is assigned. The item information, for example, may include an identity (e.g., an item identification number, an item name, etc.) of the item 20. The item information may also include an expiration parameter for the item 20. Examples of the expiration parameter include, but are not limited to, an expiration date and/or time for a calibration of the item 20 (e.g., a date and/or time when a tool is scheduled to be recalibrated, etc.), an expiration date and/or time for effective and/or best use of the item 20 (e.g., a manufacturing material expiration, a best-if-use-by date, etc.), and the like. Each item RFID tag 32 is arranged with the item 20 to which that item RFID tag 32 is assigned. Each item RFID tag 32, for example, may be affixed to, disposed within packaging for, disposed within a container of and/or otherwise carried with / by the item to which that item RFID tag 32 is assigned.

The RFID reading system 34 includes one or more radio-frequency identification (RFID) readers 44 and 46. Each of these RFID readers 44 and 46 is configured to transmit the electromagnetic interrogation signal which triggers one or more of the RFID tags 30 and/or 32 to each transmit its output signal. Each of the RFID readers 44 and 46 is also configured to receive the output signal(s) from the triggered RFID tag(s) 30 and/or 32. Each of the RFID readers 44 and 46 may thereby read and/or otherwise obtain information (e.g., the user information, the item information, etc.) associated with the triggered RFID tag(s) 30 and/or 32.

The user interface RFID reader 44 (e.g., an item checkout and/or check-in RFID reader) may be configured for short range RFID tag reading. The user interface RFID reader 44, for example, may be configured to read and/or otherwise obtain information from a respective one of the RFID tags 30, 32 when that RFID tag 30, 32 is within a (e.g., maximum) range of the user interface RFID reader 44. This user interface RFID reader range may be equal to or less than, for example, ten centimeters (10cm, ~3.94 inches) or fifteen centimeters (15cm, ~5.91 inches). Of course, in other embodiments, the user interface RFID reader range may be greater than the fifteen centimeters; but, in general is less than one-half of a meter (0.5m, ~ 1.64 feet). Referring to FIG. 1, the user interface RFID reader 44 may be arranged within the item storage area 22 at a location to which a user may readily have access. The user interface RFID reader 44, for example, may be mounted on one of the walls 24, a stand, a desk or the like within the item storage area 22 at about chest-height or about waste height for an average height male or female. The present disclosure, however, is not limited to such an exemplary user interface RFID reader arrangement. For example, in other embodiments, the user interface RFID reader 44 may be part of a portable unit (e.g., a handheld unit) located within the item storage area 22.

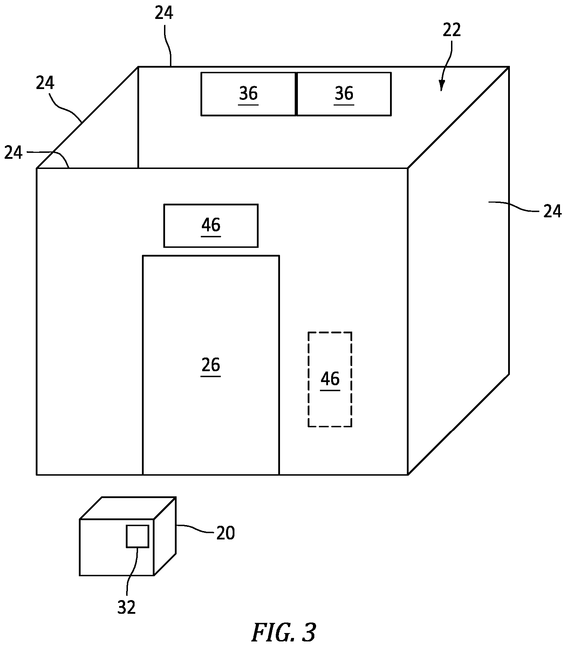

The monitoring RFID reader 46 of FIG. 2 may be configured for long range RFID tag reading. The monitoring RFID reader 46, for example, may be configured to read and/or otherwise obtain information from a respective one of the RFID tags 32 when that RFID tag 32 is within a (e.g., maximum) range of the monitoring RFID reader 46. This monitoring RFID reader range may be equal to or less than, for example, four meters (4m, 13.12 feet) or five meters (5m, ~16.40 feet). Of course, in other embodiments, the monitoring RFID reader range may be greater than the five meters; but, in general is less than six meters (6m, ~19.69 feet), and greater than two meters (2m, ~6.56 feet). Referring to FIG. 1, the monitoring RFID reader 46 may be arranged within or outside of the item storage area 22 at a location proximate to the portal 26. The monitoring RFID reader 46 of FIG. 3, for example, may be mounted above, to a side of or within the portal 26. The monitoring RFID reader 46 may thereby automatically read RFID tags 32 (e.g., the item RFID tags 32) passing through and/or otherwise leaving and/or entering the item storage area 22 without, for example, user interaction. In some embodiments, the monitoring RFID reader 46 may be positioned out of reach for the average height male or female such that users cannot readily reach or access the monitoring RFID reader 46. The present disclosure, however, is not limited to such an exemplary monitoring RFID reader arrangement. For example, in other embodiments, the monitoring RFID reader 46 may be mounted at a similar height as the user interface RFID reader 44 just outside of the portal 26; e.g., see dashed line monitoring RFID reader 46 in FIG. 3.

The display screen 36 of FIG. 1 is arranged within the item storage area 22. This display screen 36 may be positioned proximate to the user interface RFID reader 44. While a single display screen 36 is shown in FIG. 1, it is contemplated the display screen 36 may be one of multiple display screens 36 located within the item storage area 22; e.g., see FIG. 3.

The alert system 38 of FIG. 2 is configured to provide an alert within the item storage area 22 and/or outside of the item storage area 22. The alert system 38, for example, may include a speaker for emitting an audible alert such as an alarm sound, a tone, verbal instructions, or the like. The alert system 38 may also or alternatively include an indicator light, the display screen 36 and/or another display screen for presenting (e.g., displaying) a visual alert such as an alert symbol, an alert color, written instructions, or the like.

The control system 40 is in signal communication (e.g., hardwired and/or wirelessly coupled) with the RFID reading system 34 and its readers 44 and 46 as well as the display screen 36 and the alert system 38. The control system 40 may be implemented with a combination of hardware and software. The hardware may include memory 50 and at least one processing device 48, which processing device 48 may include one or more single-core and/or multi-core processors. The hardware may also or alternatively include analog and/or digital circuitry other than that described above.

The memory 50 is configured to store software (e.g., program instructions) for execution by the processing device 48, which software execution may control and/or facilitate performance of one or more operations such as those described below. The memory 50 may be a non-transitory computer readable medium. For example, the memory 50 may be configured as or include a volatile memory and/or a nonvolatile memory. Examples of a volatile memory may include a random access memory (RAM) such as a dynamic random access memory (DRAM), a static random access memory (SRAM), a synchronous dynamic random access memory (SDRAM), a video random access memory (VRAM), etc. Examples of a nonvolatile memory may include a read only memory (ROM), an electrically erasable programmable read-only memory (EEPROM), a computer hard drive, etc.

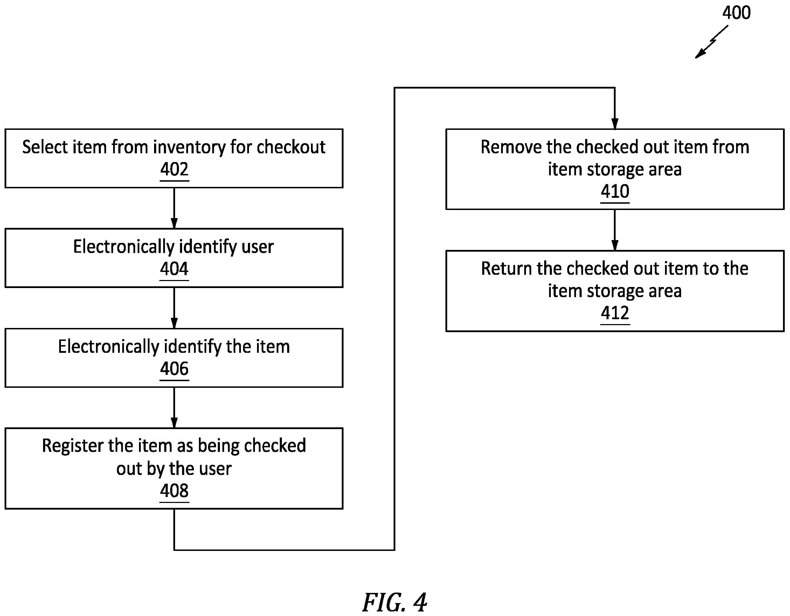

FIG. 4 is a flow diagram of a method 400 for item management within an environment such as the manufacturing facility. For ease of description, the item management method 400 is described below with reference to the item storage area 22 of FIG. 1 and the item management system 28 of FIG. 2. The item management method 400 of the present disclosure, however, is not limited to such an exemplary operating environment nor item management system.

In step 402, a user selects an item 20 (or items 20) from an inventory of the items 20 stored within the item storage area 22 to checkout. The user, for example, may walk into the item storage area 22 through the portal 26. The user may pick up or otherwise gather the item 20 (or items 20) that the user intends to checkout. The user may subsequently move with the selected item 20 (or items 20) to the region within the item storage area 22 with the user interface RFID reader 44 to begin an item checkout process; e.g., steps 404, 406 and 408 below.

In step 404, an identity of the user is electronically determined. The user, for example, may place his/her identification device 42 and, more particularly, the user RFID tag 30 near or against the user interface RFID reader 44. When the user RFID tag 30 moves into the range of the user interface RFID reader 44, the user interface RFID reader 44 may trigger the user RFID tag 30 and subsequently receive the user information (or a signal indicative thereof) from the triggered user RFID tag 30. The user interface RFID reader 44 may provide this user information (or the signal indicative thereof) to the control system 40.

In step 406, an identity of the item 20 (or items 20) to be checked out is electronically determined. The user, for example, may place the item 20 and, more particularly, the item RFID tag 32 near or against the user interface RFID reader 44. When the item RFID tag 32 moves into the range of the user interface RFID reader 44, the user interface RFID reader 44 may trigger the item RFID tag 32 and subsequently receive the item information (or a signal indicative thereof) from the triggered item RFID tag 32. The user interface RFID reader 44 may provide this item information (or the signal indicative thereof) to the control system 40.

In step 408, the identified item 20 (or items 20) may be registered as checked out by the identified user. The control system 40, for example, may update its inventory database to record that the identified item 20 is being removed from the item storage area 22 by the identified user. The control system 40 may also record the date and/or time at which the identified item 20 is being checked out by the identified user. A manager and/or another user may thereby query (if authorized) by whom and/or when the item 20 was checked out. The control system 40 may also or alternatively signal the display screen 36 to publicly display (e.g., to observers within the item storage area 22) information associated with the checked out item 20, during the checkout process, when requested and/or continuously when available. This information may include, but is not limited to:
▪ a status that the item 20 has been checked out;
▪ an identification of the item 20 checked out by the user;
▪ an identification of the user who checked the item 20 out;
▪ a date and/or a time when the item 20 was checked out;
▪ a date and/or a time when the item 20 is expected to be returned (if available); and/or
▪ a status of the checked out item 20 (e.g., a date and/or a time of the expiration parameter).
The user checking the item 20 out may also review this information to ensure the item registered as being checked out matches the actual item 20 being checked out.

Where the control system 40 checks the expiration parameter of the item 20 being checked out, the control system 40 may signal the display screen 36 to provide information to the user checking out that item 20. For example, when the item 20 is within a first period (e.g., five to seven days, one to two weeks, etc.) of the expiration parameter (e.g., the date and/or time when a tool is scheduled to be recalibrated, etc.), a first notification may be provided to the user. For example, the control system 40 may signal the display screen 36 may display a moderate level caution symbol, color and/or message to the user. When the item 20 is within a second period (e.g., within one or two days, one or two hours, etc.) of the expiration parameter, a second notification may be provided to the user. For example, the control system 40 may signal the display screen 36 may display a high level caution symbol, color and/or message to the user. However, when the item 20 has met or exceeded the expiration parameter, the controller may terminate the checkout process and signal the display screen 36 to notify the user the item 20 cannot be checked out because it has expired.

In step 410, following a successful checkout process, the user may leave the item storage area 22 with the checked out item 20. As the user removes the item 20 from the item storage area 22, the monitoring RFID reader 46 may be used to (e.g., automatically) electronically identify the item being removed. For example, when the item RFID tag 32 moves into the range of the monitoring RFID reader 46, the monitoring RFID reader 46 may trigger the item RFID tag 32 and subsequently receive the item information (or a signal indicative thereof) from the triggered item RFID tag 32. The monitoring RFID reader 46 may provide this item information (or the signal indicative thereof) to the control system 40. Where the control system 40 determines the identified item 20 being removed from the item storage area 22 has been successfully checked out, the user may continue on his/her way to use the checked out item 20 without intervention. However, where the control system 40 determines the identified item 20 being removed from the item storage area 22 has not been checked out, the control system 40 may trigger a response. The control system 40, for example, may signal the alert system 38 to provide a visual and/or an audible alert that an item 20 is being removed from the item storage area 22 which has not been checked out. This alert may inform the user that the item 20 was not successfully checked out, and the user may return to the user interface RFID reader 44 to perform the checkout process. Of course, the control system 40 may also or alternatively provide an alert to a manager for the item storage area 22 and/or to security personnel.

In step 412, the checked out item 20 is returned to the item storage area 22. For example, following item use, the user may bring the item 20 back into the item storage area 22 through the portal 26. As the user walks with the item 20 back through the portal 26, the monitoring RFID reader 46 may automatically identify the item 20 via its item RFID tag 32. The monitoring RFID reader 46 may provide the item information read or otherwise obtained from the item RFID tag 32 to the control system 40, and the control system 40 may automatically check the item 20 back into the inventory. Alternatively, a manual check-in process may be performed to register the item 20 as being returned to the inventory. This manual check-in process may be similar to the checkout process described above, where the item 20 (and optionally the user) is electronically identified using the user interface RFID reader 44.

In some embodiments, while the item 20 is checked out from the item storage area 22, a tracking system 52 of FIG. 2 may be utilized to track a location of the checked out item 20 within the operating environment. This tracking system 52, for example, may include one or more additional monitoring RFID readers 46 located strategically about the operating environment. The tracking system 52 may also or alternatively be utilized to track a location of an item 20 which is removed from the item storage area 22 without being checked out.

In some embodiments, the item 20 being checked out from the item storage area 22 may be a tool cart. Under certain circumstances, a user may have previously checked out a tool stored in the tool cart from the item storage area 22. Thus, when another user subsequently tries to checkout the entire tool cart, the control system 40 may signal the display screen 36 to provide a notification to this subsequent user that the tool cart is missing the specified tool. The display screen 36 may also display information about whom the other user is that checked out the missing tool, and when that tool was checked out. The subsequent user may then decide to checkout another tool cart, find the previous user to gain access to the missing tool, or continue on when that missing tool is not needed at the present time.

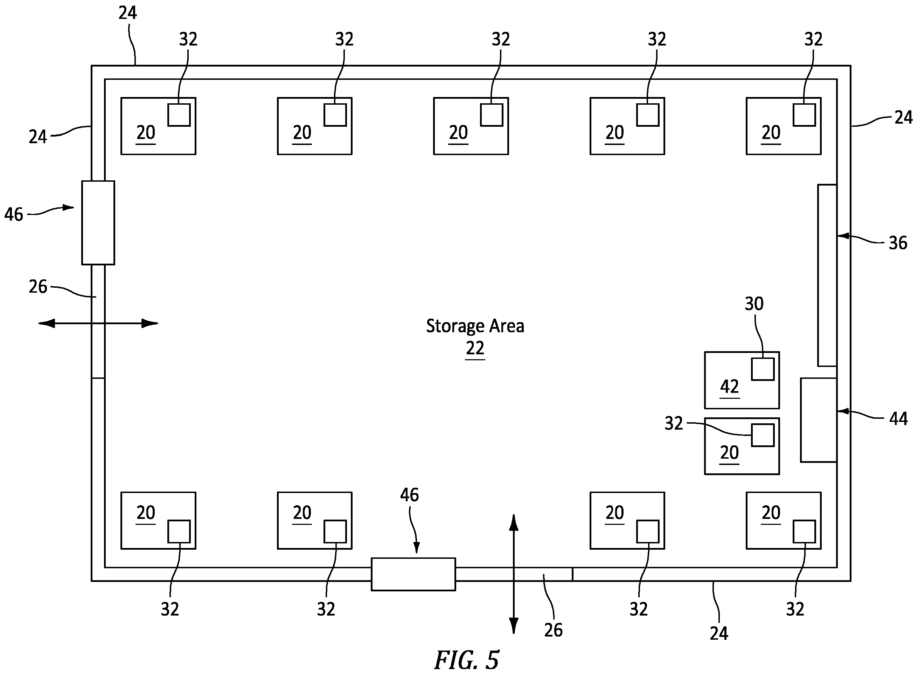

In some embodiments, referring to FIG. 5, multiple of the portals 26 may provide access to the item storage area 22. In such embodiments, each of the portals 26 may be associated with a discrete monitoring RFID reader 46. With such an arrangement, the RFID reading system 34 and its monitoring RFID readers 46 may monitor the movement of the item(s) 20 through or about each of the portals 26.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims and their equivalents.

## Claims

1. A system for item management, comprising:
a radio-frequency identification reading system (34) for an item storage area (22), the radio-frequency identification reading system (34) configured to receive user information from a user radio-frequency identification tag (32), and the radio-frequency identification reading system (34) configured to receive item information from an item radio-frequency identification tag (30); and
a control system (40) in signal communication with the radio-frequency identification reading system (34), the control system (40) configured to perform a checkout process for an item (20) inventoried within the item storage area (22) to a user, the user radio-frequency identification tag (32) assigned to the user, the item radio-frequency identification tag (30) disposed with the item (20), and the checkout process including
identifying the user based on the user information received by the radio-frequency identification reading system (34);
identifying the item (20) to be checked out based on the item information received by the radio-frequency identification reading system (34); and
registering the item (20) as being checked out to the user using the user information and the item information;
the control system (40) configured to identify the item (20) as the item (20) is removed from the item storage area (22) based on the item information received by the radio-frequency identification reading system (34); and
the control system (40) configured to trigger a response when the item (20) removed from the item storage area (22) has not been registered as being checked out.

2. The system of claim 1, further comprising an alert system (38) for the item storage area (22), the response comprising an alert issued by the alert system (38).

3. The system of claim 1 or 2, wherein
the radio-frequency identification reading system (34) includes a first radio-frequency identification reader (44) arranged within the item storage area (22); and
the first radio-frequency identification reader (44) is configured to obtain the user information and the item information for the checkout process, optionally wherein:
the radio-frequency identification reading system (34) includes a second radio-frequency identification reader (44) arranged at a portal (26) for the item storage area (22); and
the second radio-frequency identification reader (44) is configured to obtain the item information as the item (20) is removed from the item storage area (22) through the portal (26).

4. The system of any preceding claim, wherein the user radio-frequency identification tag (32) is included as part of a user identification device (42) and/or the item radio-frequency identification tag (30) is affixed to the item (20).

5. The system of any preceding claim, wherein the item (20) comprises a tool and/or a manufacturing material.

6. The system of any preceding claim, wherein the item (20) comprises a cart storing a plurality of tools, optionally further comprising a display screen (36) within the item storage area (22) and in signal communication with the control system (40), the control system (40) configured to signal the display screen (36) to display a notification to the user during the checkout process when information is known that another user previously checked out one or more of the plurality of tools from the cart.

7. The system of any preceding claim, further comprising a or the display screen (36) arranged within the item storage area (22) and in signal communication with the control system (40), the control system (40) configured to signal the display screen (36) to display inventory information related to the item (20) registered as being checked out to the user.

8. The system of claim 7, wherein the inventory information includes:
an identification of the item (20) and an identification of the user; and/or a date and/or a time at which the item (20) was registered as being checked out to the user.

9. The system of any preceding claim, further comprising a or the display screen (36) arranged within the item storage area (22) and in signal communication with the control system (40), the control system (40) configured to signal the display screen (36) to display a notification to the user during the checkout process when a parameter for the item (20) is within a predetermined time of expiration.

10. The system of any preceding claim, wherein the control system (40) is configured to perform a check-in process for the item (20) when the item (20) is returned to the item storage area (22), and the check-in process includes:
identifying the item (20) to be checked-in based on the item information received by the radio-frequency identification reading system (34); and
registering the item (20) as being checked-in by the user using the item information.

11. The system of any preceding claim, further comprising a tracking system (52) configured to track a location of the item (20) when the item (20) is outside of the item storage area (22).

12. A system for item management, comprising:
a first radio-frequency identification reader (44) configured to obtain user information from a user radio-frequency identification tag (32) when the user radio-frequency identification tag (32) is within a first distance to the first radio-frequency identification reader (44), and the radio-frequency identification reading system (34) configured to obtain item information from an item radio-frequency identification tag (30) when the item radio-frequency identification tag (30) is within the first distance to the first radio-frequency identification reader (44);
a second radio-frequency identification reader (46) configured to obtain the item information from the item radio-frequency identification tag (30) when the item radio-frequency identification tag (30) is within a second distance to the first radio-frequency identification reader (44) that is greater than the first distance; and
a control system (40) in signal communication with the first radio-frequency identification reader (44) and the second radio-frequency identification reader (46);
the control system (40) configured to perform a checkout process for an item inventoried within an item storage area (22) to a user using the user information and the item information obtained by the first radio-frequency identification reader (44), the user radio-frequency identification tag (32) assigned to the user, and the item radio-frequency identification tag (30) disposed with the item (20);
the control system (40) configured to identify the item as the item is removed from the item storage area (22) based on the item information automatically obtain by the second radio-frequency identification reader (46); and
the control system (40) configured to trigger a response when the item removed from the item storage area (22) is still registered as being inventoried within the item storage area (22).

13. A method for item management, comprising:
storing a plurality of items (20) within an item storage area (22), the plurality of items (20) comprising a first item;
checking out the first item from an inventory of the plurality of items (20) stored within the item storage area (22) to a user, the checking out of the first item including:
electronically identifying the user;
electronically identifying the first item; and
registering the first item as being checked out to the user; and
electronically monitoring removal of each item (20) of the plurality of items (20) removed from the storage area, and triggering a response when any one of the plurality of items is removed from the item storage area (22) without first being checked out.

14. The method of claim 13, wherein the electronically identifying of the user, the electronically identifying of the first item and the electronically monitoring of the removal of each item (20) of the plurality of items (20) removed from the storage area is performed using a radio-frequency identification reading system (34).

15. The method of claim 13 or 14, wherein the response comprises an audible and/or visual alert to observers at the item storage area (22).
